Europäisches Patentamt

European Patent Office

Office européen des brevets

(19)

(11) **EP 0 843 792 B1**

(12) **FASCICULE DE BREVET EUROPEEN**

(45) Date de publication et mention
de la délivrance du brevet:
**10.10.2001 Bulletin 2001/41**

(21) Numéro de dépôt: **96927731.8**

(22) Date de dépôt: **02.08.1996**

(51) Int Cl.⁷: **F16H 61/02**

(86) Numéro de dépôt international:
**PCT/FR96/01232**

(87) Numéro de publication internationale:
**WO 97/06374 (20.02.1997 Gazette 1997/09)**

(54) **PROCEDE DE SUPPRESSION D'UNE INSTABILITE DE LA BOITE DE VITESSES AUTOMATIQUE D'UN VEHICULE EN PASSANT CONSTAMMENT D'UN RAPPORT AU RAPPORT SUPERIEUR ET INVERSEMENT**

VERFAHREN ZUM VERMEIDEN EINES STÄNDIGEN HIN- UND HERSCHALTENS EINES AUTOMATISCHEN KRAFTFAHRZEUGGETRIEBES

METHOD FOR ELIMINATING INSTABILITY IN A VEHICLE AUTOMATIC TRANSMISSION WHICH CONSTANTLY SHIFTS FROM ONE SPEED RATIO TO THE HIGHER RATIO AND CONVERSELY

(84) Etats contractants désignés:
**BE DE ES GB IT**

(30) Priorité: **10.08.1995 FR 9509740**

(43) Date de publication de la demande:
**27.05.1998 Bulletin 1998/22**

(73) Titulaire: **RENAULT**
**92109 Boulogne-Billancourt (FR)**

(72) Inventeur: **TAFFIN, Christian**
**F-78400 Chatou (FR)**

(56) Documents cités:
**EP-A- 0 120 191          EP-A- 0 391 387**
**EP-A- 0 532 365          EP-A- 0 559 263**
**EP-A- 0 588 417          EP-A- 0 719 966**
**DE-A- 4 240 762          DE-A- 4 326 182**
**US-A- 5 241 476          US-A- 5 479 345**

• **PATENT ABSTRACTS OF JAPAN vol. 016, no. 036 (M-1205), 29 Janvier 1992 & JP 03 244860 A (HITACHI LTD;OTHERS: 01), 31 Octobre 1991,**
• **PATENT ABSTRACTS OF JAPAN vol. 010, no. 249 (M-511), 27 Août 1986 & JP 61 079056 A (TOYOTA MOTOR CORP), 22 Avril 1986,**

**Description**

La présente invention concerne un procédé de suppression du phénomène de pompage d'un véhicule automobile à boîte de vitesses automatique, ainsi qu'un véhicule automobile mettant en oeuvre ce procédé.

Le phénomène de pompage est courant dans le domaine des véhicules automobiles à boîte de vitesses automatique. Il s'agit d'une instabilité de la boîte de vitesses automatique, qui dans certaines circonstances passe constamment d'un rapport au rapport supérieur et inversement.

Ce phénomène se produit généralement lorsqu'un véhicule équipé d'une transmission automatique est soumis à un certain niveau d'efforts résistants qui sont en pratique causés par une route pentue, une présence de vent assez fort, une charge importante du véhicule, ou encore lorsque le véhicule se déplace en altitude, c'est-à-dire sous des pressions atmosphériques relativement faibles.

Une solution théorique à ce problème consiste à interdire tout passage au rapport de boîte supérieur si l'accélération que le véhicule aurait sur ce rapport supérieur est négative, et si le véhicule est soumis à des efforts résistants importants.

Une solution partielle a été apportée en pratique au problème du pompage par le procédé de prévision adaptative de rétrogradage, décrit dans le brevet US-A-5 241 476 de Chrysler Corporation. Selon ce document, le procédé consiste à déterminer si le véhicule pouvait maintenir sa vitesse sur le rapport supérieur, et si non, à empêcher le passage du rapport supérieur. Ce procédé fait appel au calcul de l'accélération du véhicule sur le rapport supérieur, mais sans connaître de façon précise la masse du véhicule. Le résultat de la détermination est donc erroné. De plus, selon ce document, seuls les cas de pompage entre la 3ème et la 4ème vitesse sont supprimés, alors que les autres cas de pompage peuvent intervenir.

En outre, ce procédé consiste à bloquer le rapport engagé si les calculs conduisent à une accélération qui serait négative sur le rapport supérieur. Ce critère conduit à des blocages intempestifs sur le rapport engagé, dès lors que la valeur de l'accélération calculée est légèrement négative. De même, si l'accélération oscille autour de zéro, on commuterait de façon aléatoire d'une condition de non blocage à une condition de blocage, et ainsi de suite.
Par la publication DE 4326182A (état de technique le plus proche), on connaît un procédé de suppression du phénomène de pompage d'un véhicule automobile selon lequel on élabore un signal d'interdiction de passage sur le rapport supérieur à partir des informations de force d'accélération, de masse du véhicule, et d'accélération instantanée .
Toutefois, l'état des freins n'est pas pris en compte. Par conséquent, ces informations ne sont pas représentatives du comportement réel du véhicule.
La présente invention propose de tenir compte de l'influence de l'état des freins et de la pente sur le comportement du véhicule en exploitant des informations-accélération sur le rapport supérieur et efforts résistants-représentatives de ce comportement.
Dans ce but elle propose un procédé selon lequel :

- on détermine la masse du véhicule, en utilisant la vitesse mesurée du véhicule, le rapport courant de la boîte de vitesses, le régime moteur, l'angle d'ouverture des papillons de gaz du moteur, et en tenant compte des freins,
- on détermine l'accélération que le véhicule connaîtrait sur le rapport supérieur à partir de la masse du véhicule,
- on détermine la somme des efforts résistants appliqués au véhicule,
- on détermine la possibilité d'avoir un phénomène de pompage sur le rapport supérieur, notée "risque de pompage", à partir des informations d'accélération et d'efforts résistants, et
- on élabore le signal d'interdiction à partir de l'information "risque de pompage".

Selon d'autres caractéristiques du procédé selon l'invention :

- pour déterminer la possibilité d'avoir un phénomène de pompage sur le rapport supérieur, on utilise une technique de logique floue; comportant les étapes consistant à :

- déterminer le degré d'appartenance de l'accélération potentielle sur le rapport supérieur à un sous-ensemble flou négatif défini par un seuil d'accélération donné;
- déterminer le degré d'appartenance des efforts résistants à un sous-ensemble flou positif défini par un seuil inférieur d'efforts résistants et par un seuil supérieur d'efforts résistants;
- à partir des degrés d'appartenance aux sous-ensembles flous, déterminer le risque-de-pompage sur le rapport supérieur comme étant la valeur minimale du couple des degrés d'appartenance;
- les seuils inférieur et supérieur des efforts résistants, et/ou le seuil d'accélération sur la rapport supérieur sont déterminés par une mise au point, et dépendent du rapport courant engagé;
- la détermination de la masse du véhicule comporte les étapes consistant à :
- calculer l'accélération du véhicule à partir de la vitesse mesurée du véhicule;

- calculer le couple à la roue à partir de l'angle d'ouverture du papillon des gaz, du régime moteur et du rapport de démultiplication de la boîte de vitesses sur le rapport courant;
- déterminer une série de p variations de l'accélération et du couple entre deux instants donnés ;
- calculer la masse du véhicule par une technique d'identification des moindres carrés récursifs des variations de l'accélération et du couple.
- l'étape de calcul de la masse du véhicule comporte une étape de calcul d'une masse brute calculée pour chaque variation de l'accélération et du couple, suivie d'une étape de calcul de la masse par calcul d'une moyenne récursive à partir des informations de masse brute successives.
- l'étape de calcul de l'accélération du véhicule à partir de la vitesse mesurée du véhicule comporte les étapes consistant à:

- filtrer l'information de vitesse mesurée à l'aide d'un filtre passe-bas numérique du premier ordre, de manière à obtenir une information de vitesse filtrée ;
- calculer la dérivée numérique de l'information de vitesse filtrée de façon à obtenir une information d'accélération du véhicule ;
- filtrer l'information d'accélération du véhicule à l'aide d'un filtre numérique passe-bas, de façon à obtenir une information d'accélération filtrée du véhicule.
- l'étape de calcul du couple à la roue comporte les étapes consistant à:

- calculer le couple à la roue en multipliant le rapport de démultiplication de la transmission du véhicule sur le rapport courant, par le couple moteur;
- filtrer le couple à la roue à l'aide de filtres passe-bas de manière à obtenir une information de couple à la roue en phase avec l'information d'accélération filtrée du véhicule.
- la série de p variations de l'accélération et du couple est calculée entre deux instants espacés de l'ordre de 0,5 seconde à 2,5 secondes.
- les moindres carrés récursifs des variations de l'accélération et du couple sont calculés pour des variations de l'accélération et du couple obtenues lorsque les freins du véhicule ne sont pas activés, lorsque la variation de l'angle d'ouverture du papillon des gaz entre les instants donnés est inférieure à un seuil prédéterminé, et lorsque les produits des variations du couple par les variations de l'accélération sont supérieurs à un seuil positif prédéterminé.

L'invention concerne également un véhicule automobile mettant en oeuvre le procédé de suppression du phénomène de pompage ayant les caractéristiques ci-dessus.

L'invention sera mieux comprise en se référant à la description suivante faite à titre d'exemple non limitatif et aux dessins ci-annexés, dans lesquels:

- la figure 1 représente, dans un graphe de l'angle d'ouverture du papillon des gaz en fonction de la vitesse d'un véhicule, un cycle caractéristique de l'effet de pompage;
- la figure 2 représente une vue schématique partielle d'un véhicule automobile mettant en oeuvre le procédé de suppression de pompage en logique floue selon l'invention;
- la figure 3 représente un organigramme de principe des étapes du procédé de suppression de pompage selon l'invention;
- la figure 4 représente un graphe de la fonction d'appartenance de l'accélération sur le rapport supérieur $\gamma(N+1)$, au sous-ensemble flou négatif ;
- la figure 5 représente un graphe de la fonction d'appartenance de l'effort résistant $F_{résistant}$ au sous-ensemble flou positif;
- la figure 6 représente un organigramme des étapes du procédé de détermination de la masse du véhicule.

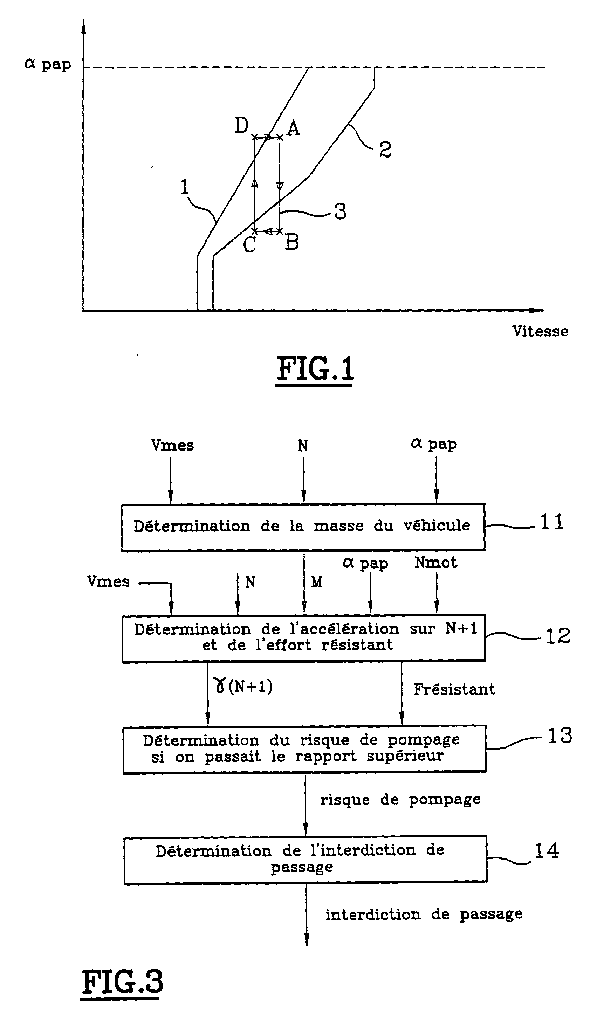

On se réfère à la figure 1. On a représenté dans cette figure le cycle classique d'un phénomène de pompage, dans un graphe représentant l'angle $\alpha_{pap}$ d'ouverture du papillon des gaz en fonction de la vitesse du véhicule. Sur cette figure apparaissent deux courbes 1 et 2 de passage des rapports de boîte de vitesses du véhicule, respectivement du rapport N au rapport N-1 (courbe 1) et du rapport N au rapport N+1 (courbe 2), et un cycle 3 ABCD typique caractéristique du phénomène de pompage.

Partant d'un point de fonctionnement A correspondant à un rapport de boîte N, le conducteur juge que la vitesse du véhicule est suffisamment élevée et lève le pied de l'accélérateur, ce qui fait diminuer l'angle $\alpha_{pap}$ et correspond au passage au point B du cycle. Ce faisant, le cycle croise la courbe 2, et par conséquent le rapport supérieur N+1 s'enclenche, par exemple la quatrième vitesse s'enclenche si la troisième était enclenchée. Si sur ce nouveau rapport le conducteur peut maintenir la vitesse du véhicule, il n'y a pas de problème particulier.

Par contre, lorsque la somme des efforts résistants appliqués au véhicule est relativement importante, le véhicule ne peut maintenir sa vitesse sur le rapport N+1. La vitesse diminue, et lorsque le point C est atteint, le conducteur réaccélère. L'angle $\alpha_{pap}$ augmente, et le point de fonctionnement passe au point D du cycle. Ce faisant, le cycle croise la courbe 1, de sorte que le rapport N-1 s'enclenche.

L'accélération qui en résulte se traduit alors par une augmentation de la vitesse de sorte que le point A est à nouveau atteint. Ce cycle ABCD caractérise le pompage et donne lieu à une conduite inconfortable et inefficace dans un véhicule à transmission automatique.

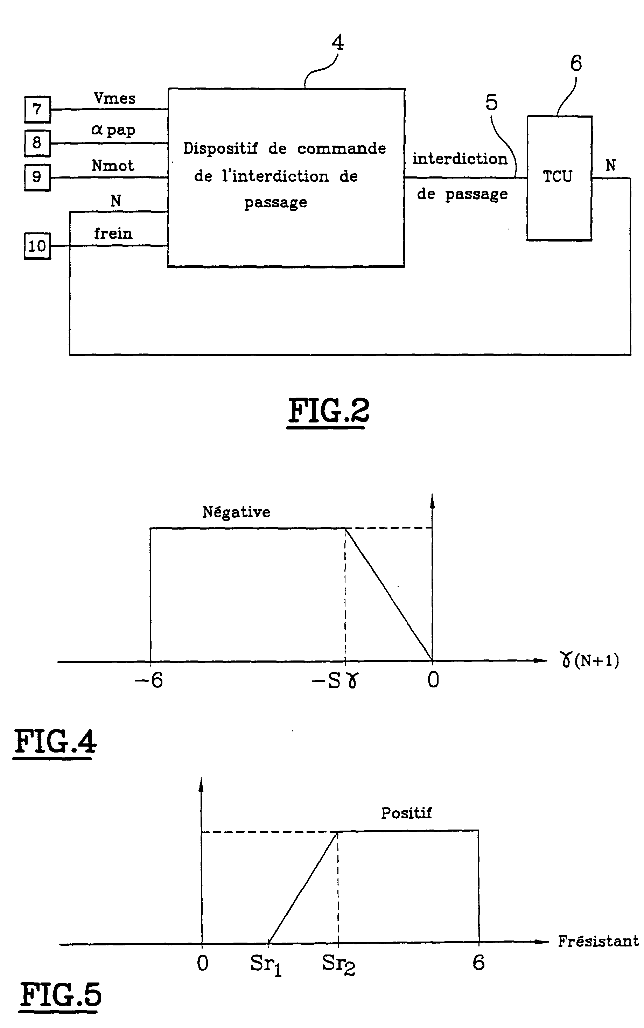

Afin de remédier à ce problème, l'invention prévoit un procédé de suppression du pompage, schématisé en figure 2 en liaison avec les éléments fonctionnels correspondants d'un véhicule automobile. Ce procédé met en jeu l'élaboration par le bloc fonctionnel 4, et selon une méthode indiquée en figure 3 et détaillée plus loin, d'une variable 5 d'interdiction de passage au rapport supérieur, qui est utilisée par un bloc fonctionnel 6 représentant l'unité de contrôle de la transmission, qui décide du rapport N à appliquer à la boîte de vitesses automatique (non représentée). Le bloc fonctionnel 6 intègre une logique de commande connue en soi, qui reçoit une information de type binaire (0 ou 1) interdisant ou autorisant le passage au rapport supérieur, cette information étant gérée par le bloc fonctionnel 6 pour l'enclenchement des vitesses.

Le bloc fonctionnel 4, qui est un ensemble logique électronique dont la réalisation découle de façon simple de ses fonctions, est un bloc qui génère l'information d'interdiction de passage 5 à partir des informations issues de capteurs 7,8,9,10 associés au véhicule, ces capteurs comprenant un capteur de vitesse indiqué en 7 et fournissant la vitesse mesurée du véhicule, notée $V_{mes}$, un capteur 8 de mesure de l'angle d'ouverture $\alpha_{pap}$ du papillon des gaz du véhicule, un capteur 9 de mesure de la vitesse de rotation du moteur, notée $N_{mot}$, et un capteur de freinage 10 indiquant de façon binaire si le conducteur freine ou non à l'instant considéré. Le bloc 4 reçoit en outre du bloc 6 une information indiquant le rapport N qui est appliqué à la boîte de vitesses automatique.

La figure 3 détaille le mode d'élaboration par le bloc 4 de la figure 2, de la variable d'interdiction de passage au rapport supérieur. Les différents blocs représentés correspondent à des étapes du procédé selon l'invention, mais on peut noter qu'ils peuvent également représenter les blocs de calcul d'un dispositif apte à mettre en oeuvre le procédé. Ces blocs de calcul peuvent aisément être réalisés par l'homme du métier à partir de leurs fonctions qui sont décrites ici. Par conséquent, les blocs de calcul ne seront pas décrits de façon détaillée.

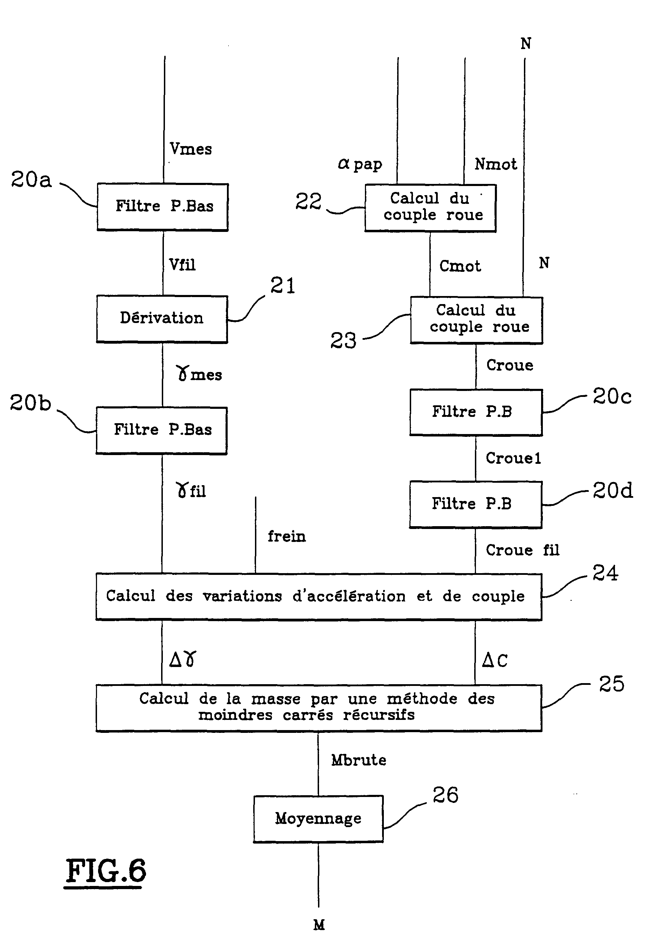

La première étape consiste à déterminer, dans le bloc 11, la masse M du véhicule, cette information étant alors transmise au bloc 12. Celui-ci détermine l'accélération $\gamma(N+1)$ que le véhicule connaîtrait sur le rapport supérieur N+1, cette accélération étant déterminée notamment à partir de la masse M du véhicule, dont l'origine sera expliquée en liaison avec la figure 6. Le bloc 12 détermine également une évaluation de la somme des efforts résistants $F_{résistant}$.

A partir de ces deux informations $\gamma(N+1)$ et $F_{résistant}$, le bloc 13 détermine le risque ou la possibilité de pompage que l'on pourrait avoir sur le rapport supérieur N+1, notée « risque-de-pompage » et dont la valeur est comprise entre 0 et 1, où 0 correspond à l'absence de pompage et où « 1 » correspond à une probabilité certaine.

Le bloc 14 détermine le signal d'interdiction de passage qui empêche le passage à tout rapport supérieur.

L'invention prévoit que la détermination de la masse M du véhicule est effectuée selon une procédure dont les étapes sont schématisées dans la figure 6. Dans cette figure, la vitesse $V_{mes}$ du véhicule telle que mesurée par le capteur 7 est filtrée dans le bloc de filtrage 20a faisant appel à un filtre numérique passe-bas du premier ordre, qui délivre une information de vitesse filtrée $V_{fil}$, calculée à partir de la vitesse $V_{mes}$ à l'aide de la formule de récurrence suivante:

$$(1)\ V_{fil}(t) = K.V_{fil}(t-Te) + (1-K).V_{mes}(t),$$

dans laquelle t est l'instant d'échantillonnage courant, t-Te l'instant d'échantillonnage précédent, Te la période d'échantillonnage, K la constante de filtrage du filtre calculée selon l'expression suivante:

$$(2)\ K = \exp(-2\pi.fc.Te)$$

où fc est la fréquence de coupure du filtre et exp désigne la fonction exponentielle. Le bloc 21 traite l'information de vitesse filtrée $V_{fil}$ de façon à calculer l'accélération $\gamma_{mes}$ du véhicule, à l'aide de la formule de dérivation numérique classique:

$$(3):\ \gamma_{mes}(t) = [V_{fil}(t) - V_{fil}(t-Te)]/Te$$

Cette information $\gamma_{mes}$ représentative de l'accélération du véhicule est ensuite filtrée à l'aide du bloc de filtrage 20b, qui a la même fonction que le bloc 20a, de façon à délivrer l'information $\gamma_{fil}$, représentative de l'accélération filtrée du véhicule. Le bloc 22 détermine, à partir des informations $\alpha_{pap}$ (angle d'ouverture des papillons de gaz) et $N_{mot}$ (régime de rotation du moteur), une valeur représentative du couple moteur, qui peut être obtenue par exemple par une lecture interpolée dans une cartographie. Pour des raisons de bonne convergence de la procédure de calcul de la masse, il est nécessaire que la précision sur le couple moteur soit bonne.

Le bloc 23 permet de déterminer le couple à la roue du véhicule, à partir du couple moteur et du rapport de transmission N, à l'aide de la formule:

$$(4): C_{roue}\ (N) = rap(N).C_{mot},$$

dans laquelle rap(N) est le rapport de démultiplication de la transmission sur le rapport N et $C_{mot}$ le couple moteur.

Cette valeur du couple à la roue est filtrée deux fois consécutives par le bloc de filtrage 20c, qui délivre l'information $C_{roue.fil}$.

Les blocs 20c et 20d ont la même fonction que le bloc 20a, et ont pour but principal de mettre en phase les deux informations $\gamma_{fil}$ et $C_{roue.fil}$, pour les traitements qui leur seront appliqués.

Le bloc 24 a pour fonction entre autres de calculer les variations de couple et d'accélération que l'on note $\Delta C$ et $\Delta\gamma$, qui alimenteront le bloc 25 qui calcule la masse du véhicule M par une technique d'identification des moindres carrés récursifs. En effet, entre deux instants $t_1$ et $t_2$ suffisamment proches pour que les variations de couple et d'accélération soient significatives, et suffisamment peu éloignés pour que les efforts résistants varient peu ou pas, la relation qui relie $\Delta C$ à $\Delta\gamma$ est:

$$(5): M.\Delta\gamma = \Delta C/rayon,$$

où rayon désigne le rayon de la roue.

La méthode des moindres carrés récursifs utilisée dans le bloc 25 permet de calculer, à partir d'un ensemble de P mesures de variations de couple et d'accélération $\Delta C(i)$ et $\Delta\gamma(i)$, i étant l'indice de la mesure, de déterminer le paramètre M qui minimise le critère quadratique:

$$(6): J = \Sigma(i=1\ \text{à}\ i = p)\ (M.\Delta\gamma(i)- \Delta C(i)/rayon)^2.$$

Cette méthode d'identification est décrite par exemple dans l'ouvrage intitulé « identification et commande des systèmes », de Ioan Doré Landau, Editions Hermès 1988, pages 177 à 208. Le bloc 24 a pour fonction de déterminer les « bonnes » variations de couple et d'accélération, de telle sorte qu'un bon couple $(\Delta\gamma,\Delta C)$ est défini par les conditions (7) suivantes, en posant:

$$\Delta\gamma = \gamma(t_2)- \gamma(t_1)$$

entre deux instants $t_1$ et $t_2$

$$\Delta C = C_{roue}(t_2) - C_{roue}(t_1)$$

$$(7): \Delta\gamma.\Delta C > SC\gamma > 0$$

et

$$0,5\ s < t_2 - t_1 < 2,5\ s$$

et

$$frein = 0$$

et

$$|d(\alpha_{pap})/dt|_{t1,t2} < S_{d\alpha}$$

Les conditions (7) ci-dessus signifient:

- qu'un couple de mesures $\Delta C$ et $\Delta\gamma$ est jugé bon lorsque le produit $\Delta C.\Delta\gamma$ est supérieur à un seuil noté SC$\gamma$ positif, ce qui permet de s'assurer que les variations de couple et d'accélération sont de même signe et correspondent à une « excitation » minimale suffisante pour l'identification;
- que les calculs des variations $\Delta C$ et $\Delta\gamma$ correspondent à des points distants dans le temps d'au minimum 0,5 s pour observer des variations significatives, et de 2,5 s au maximum pour que les variations des efforts résistants n'influent pas sur la procédure d'identification;
- que les freins ne sont pas activés, car les freins créeraient des efforts résistants inconnus et variables;
- que la variation de l'angle d'ouverture du papillon des gaz aux instants $t_1$ et $t_2$ sont faibles (c'est-à-dire que la dérivée de $\alpha_{pap}(t)$ est inférieure à un seuil Sd$\alpha$, car les calculs de couple moteur à partir de cartographies aux instants $t_1$ et $t_2$ ne seront corrects que s'ils correspondent à des points stables.

Le bloc 25 a pour fonction de calculer la masse du véhicule, notée $M_{brute}$, par une technique d'identification des moindres carrés récursifs à gain constant, décrite dans l'ouvrage de Landau précité, et dont la procédure appliquée au cas présent est la suivante:

Soit M'(t-1) la masse estimée à l'instant d'échantillonnage précédent t-1. On calcule à partir d'un nouveau couple de points de mesures de variations de couple et d'accélération ($\Delta C,\Delta\gamma$), l'écart normalisé, noté $\varepsilon_{norm}$, en utilisant l'expression:

$$(8)\ \varepsilon_{norm} = [(\Delta C/rayon) - M'(t-1).\ \Delta\gamma]/(1+f.\ \Delta\gamma^2),$$

expression dans laquelle f est le gain d'adaptation qui est constant.

Le calcul de la masse à l'instant d'échantillonnage courant t résulte alors de l'expression (9) suivante:

$$(9)\ M_{brute} = M'(t) = M'(t-1) + f.\ \Delta\gamma.\varepsilon_{norm}$$

Le bloc 25 qui délivre l'information $M_{brute}$ est appelé chaque fois qu'une information ($\Delta C,\Delta\gamma$) peut être délivrée-par le bloc 24.

Le bloc 26 réalise le moyennage récursif (qui est non temporel) à chaque fois qu'une nouvelle information $M_{brute}$ est délivrée par le bloc 25, qui est à la cadence du flot d'informations en provenance du bloc 24. Ce bloc 26 délivre l'information notée M (masse moyenne) qui est calculée à partir de la masse brute $M_{brute}$, issue du bloc 25 grâce à l'expression (10):

$$(10)\ M(t) = 1/(Nb-pt+1).[Nb - pt.M(t-1) + M_{brute}]$$

expression dans laquelle Nb-pt est le nombre de fois qu'une nouvelle information $M_{brute}$ est disponible, et qui s'incrémente de 1 à chaque appel. M(t-1) est la masse moyenne à l'instant d'appel précédent t-1, M(t) la masse moyenne à l'instant d'appel courant t.

Cette détermination de la masse M du véhicule est utilisée dans le bloc 12 de la figure 3, notamment pour déterminer l'accélération que le véhicule aurait sur le rapport N+1.

Dans le bloc 12 de la figure 3, cette accélération, notée $\gamma(N+1)$ ainsi que l'effort résistant noté $F_{résistant}$, sont déterminés de la façon suivante:

$$(11)\ \gamma(N+1) = \gamma_{mes} + [C_{roue}(N+1) - C_{roue}(N)]/(rayon.M)$$

et

$$(12)\ F_{\text{résistant}} = \gamma_{\text{nom}}(\alpha_{\text{pap}}, V_{\text{mes}}, N, N_{\text{mot}}) - \gamma_{\text{mes}},$$

expressions dans lesquelles:

- $\gamma_{\text{mes}}$ est l'accélération réelle du véhicule, calculée à partir de la vitesse du véhicule par une procédure de filtrage et dérivation analogue à celle décrite concernant les blocs 60 et 21 de la figure 6;
- $C_{\text{roue}}$ (N) et $C_{\text{roue}}$(N+1) sont respectivement les couples aux roues que le véhicule présente sur le rapport N, et aurait sur le rapport N+1. $C_{\text{roue}}$(N) est calculé par une procédure identique à celle décrite dans les blocs 22,23 et 20c de la figure 6. $C_{\text{roue}}$(N+1) est calculé de façon analogue à $C_{\text{roue}}$(N), en ayant soin de calculer le régime que le moteur aurait sur le rapport N+1: $N_{\text{mot}}$(N+1) = rap(N+1).$V_{\text{mes}}$/rayon, qui sert à déterminer le couple moteur $C_{\text{mot}}$ (N+1) que le moteur aurait sur le rapport N+1. Le couple à la roue sur le rapport N+1 se déduit alors de l'expression:

$$(13)\ C_{\text{roue}}(N+1) = C_{\text{mot}}(N+1).\text{rap}(N+1),\ \text{rap}(N+1)$$

étant le rapport de démultiplication sur le rapport N+1.

Soit M la masse du véhicule, telle que calculée dans le bloc 11 de la figure 3, « rayon » le rayon des roues du véhicule, et $\gamma_{\text{nom}}(\alpha_{\text{pap}}, V_{\text{mes}}, N, N_{\text{mot}})$ l'accélération nominale à laquelle le véhicule serait soumis s'il roulait sur le plat, sans vent, avec une masse standard à vide. L'accélération nominale est calculée à l'aide de l'expression (14) suivante:

$$(14)\ \gamma_{\text{nom}} = C_{\text{roue}}(N)/\text{rayon}.M_{\text{àvide}} - T_{\text{aéro}}/M_{\text{àvide}} - T_{\text{roul}}/M_{\text{àvide}}$$

dans laquelle:

- $M_{\text{àvide}}$ est la masse du véhicule à vide
- $T_{\text{aéro}}$ est la traînée aérodynamique:
  $T_{\text{aéro}} = 1/2.\rho.Scx.V^2_{\text{mes}}$, p étant la densité de l'air et Scx le coefficient de pénétration dans l'air du véhicule;
- $T_{\text{roul}}$ est la traînée de roulement: $T_{\text{roul}} = M_{\text{àvide}}.g.kr$, où g est l'accélération due à la pesanteur (g = 9,81 m/s$^2$), et kr le coefficient de résistance au roulement.

Les deux informations $\gamma$(N+1) et $F_{\text{résistant}}$, calculées dans le bloc 12 de la figure 3, permettent de prédire si l'accélération sur le rapport N+1 peut être négative d'une part, et d'autre part de vérifier si le véhicule est soumis à des efforts résistants. Ces deux informations sont par conséquent traitées dans le bloc 13 de la figure 3, par une technique dite de logique floue, pour déterminer le risque de pompage que l'on aurait si l'unité de contrôle de la transmission (bloc 32 de la figure 2) décidait de passer le rapport supérieur N+1, que l'on note risque de pompage.

Selon la présente invention, on détermine le degré d'appartenance de $\gamma$(N+1) au sous-ensemble flou $\gamma$(N+1) négatif représenté en figure 4, dans laquelle $S_\gamma$ est un seuil qui est déterminé par le metteur au point, et qui peut être fonction du rapport qui est engagé. On note $\mu_\gamma$ ce degré d'appartenance.

On détermine également le degré d'appartenance noté $\mu_{\text{Fr}}$ de $F_{\text{résistant}}$ au sous-ensemble flou $F_{\text{résistant}}$ positif représenté en figure 5, dans laquelle les seuils $S_{r1}$ et $S_{r2}$ sont à déterminer par le metteur au point, et peuvent être fonction du rapport qui est engagé.

Ayant déterminé les degrés d'appartenance $\mu_\gamma$ et $\mu_{\text{Fr}}$, on détermine le risque de pompage sur le rapport supérieur, de la façon suivante:

$$(15)\ \text{risque de pompage} = \text{Min}(\mu_\gamma, \mu_{\text{Fr}}),$$

où Min désigne l'opérateur « minimum de ». Ce risque de pompage, représenté par la sortie du bloc 13, est traité dans le bloc 14 pour déterminer l'information d'interdiction de passage, qui va interdire le passage au rapport supérieur dans l'unité de contrôle de la transmission, de la façon suivante: dès que le risque de pompage est supérieur au seuil $S_{r1}$, l'interdiction de passage devient active, c'est-à-dire que l'interdiction de passage est à 1. Cette interdiction se désactive lorsque le risque de pompage est inférieur à $S_{r2}$. Dans ce cas, le signal d'interdiction de passage est à 0. $S_{r1}$ et $S_{r2}$ sont deux seuils déterminés par le metteur au point pour régler la sensibilité de la procédure de détection de risque de pompage.

De ce qui précède, il ressort que l'invention répond parfaitement aux objectifs fixés. Elle remédie aux inconvénients des procédés connus, et supprime le phénomène de pompage quel que soit le nombre de rapports de la transmission et le rapport engagé. En outre, les calculs par logique floue permettent de ne pas avoir de test d'existence de pompage en tout-ou-rien, qui est particulièrement enclin à conduire à un fonctionnement erratique de la transmission.

En calculant la somme des efforts résistants appliqués au véhicule, le procédé permet également de vérifier si le véhicule se trouve dans des conditions probables de pompage.

Enfin, le procédé selon l'invention permet aussi d'effectuer un calcul plus précis de la masse du véhicule, et ceci de façon dynamique.

## Revendications

**1.** Procédé de suppression du phénomène de pompage d'un véhicule automobile à boîte de vitesses automatique résultant de l'instabilité de celle-ci , par élaboration d'un signal d'interdiction de passage du rapport supérieur, destiné à être appliqué à un dispositif de commande de la boîte de vitesses, **caractérisé en ce que** :

- on détermine la masse (M) du véhicule, en utilisant la vitesse mesurée ($V_{mes}$) du véhicule, le rapport courant (N) de la boîte de vitesses, le régime moteur ($N_{mot}$), l'angle d'ouverture ($\alpha_{pap}$) des papillons de gaz du moteur, et en tenant compte de l'état des freins,
- on détermine l'accélération ($\gamma(N + 1)$) que le véhicule connaîtrait sur le rapport supérieur (N + 1) à partir de la masse (M) du véhicule,
- on détermine la somme des efforts résistants ($F_{résistants}$) appliqués au véhicule,
- on détermine la possibilité d'avoir un phénomène de pompage sur le rapport supérieure (N + 1), notée "risque de pompage", à partir des informations d'accélération ($\gamma(N + 1)$) et d'efforts résistants ($F_{résistants}$), et
- on élabore le signal d'interdiction à partir de l'information "risque de pompage".

**2.** Procédé selon la revendication 1, **caractérisé en ce que** pour déterminer la probabilité d'avoir un phénomène de pompage sur le rapport supérieur (N + 1), on utilise une technique de logique floue, comportant les étapes consistant à :

- déterminer le degré d'appartenance ($\mu_\gamma$) de l'accélération potentielle sur le rapport supérieur ($\gamma(N + 1)$) à un sous-ensemble flou négatif défini par un seuil d'accélération donné ($S_\gamma$) ;
- déterminer le degré d'appartenance ($\mu_{Fr}$) des efforts résistants à un sous-ensemble flou positif défini par un seuil inférieur ($S_{r1}$) d'efforts résistants et par un seuil supérieur ($S_{r2}$) d'efforts résistants;
- à partir des degrés d'appartenance ($\mu_\gamma$, $\mu_{Fr}$) aux sous-ensembles flous, déterminer le risque-de-pompage sur le rapport supérieur (N+1) comme étant la valeur minimale Min($\mu_\gamma$,$\mu_{Fr}$) du couple des degrés d'appartenance.

**3.** Procédé selon la revendication 2, **caractérisé en ce que** les seuils inférieur ($S_{r1}$) et supérieur ($S_{r2}$) des efforts résistants, et/ou le seuil ($S_\gamma$) d'accélération sur le rapport supérieur sont déterminés par une mise au point, et dépendent du rapport courant engagé.

**4.** Procédé selon l'une quelconque des revendications précédentes, **caractérisé en ce que** la détermination de la masse du véhicule comporte les étapes consistant à:

- calculer l'accélération ($\gamma_{mes}$) du véhicule à partir de la vitesse mesurée ($V_{mes}$) du véhicule;
- calculer le couple à la roue ($C_{roue}$) à partir de. l'angle d'ouverture des papillons de gaz ($\alpha_{pap}$), du régime moteur et du rapport de démultiplication (rap(N)) de la boite de vitesses sur le rapport courant (N);
- déterminer une série de p variations ($\Delta C,\Delta\gamma$) de l'accélération et du couple entre deux instants donnés ($t_1,t_2$);
- calculer la masse (M) du véhicule par une technique d'identification des moindres carrés récursifs des variations ($\Delta C,\Delta\gamma$) de l'accélération et du couple.

**5.** Procédé selon la revendication 4, **caractérisé en ce que** l'étape de calcul de la masse (M) du véhicule comporte une étape de calcul d'une masse brute ($M_{brute}$) calculée pour chaque variation ($\Delta C,\Delta\gamma$) de l'accélération et du couple, suivie d'une étape de calcul de la masse (M) par calcul d'une moyenne récursive à partir des informations de masse brute successives.

**6.** Procédé selon l'une des revendications 4 ou 5, **caractérisé en ce que** l'étape de calcul de l'accélération ($\gamma_{mes}$)

du véhicule à partir de la vitesse mesurée ($V_{mes}$) du véhicule comporte les étapes consistant à:

- filtrer l'information de vitesse mesurée ($V_{mes}$) à l'aide d'un filtre passe-bas numérique du premier ordre, de manière à obtenir une information de vitesse filtrée ($V_{fil}$);
- calculer la dérivée numérique de l'information de vitesse filtrée ($V_{fil}$) de façon à obtenir une information d'accélération ($\gamma_{mes}$) du véhicule;
- filtrer l'information d'accélération ($\gamma_{mes}$) du véhicule à l'aide d'un filtre numérique passe-bas, de façon à obtenir une information d'accélération filtrée ($\gamma_{fil}$) du véhicule.

7. Procédé selon l'une des revendications 4 ou 5, **caractérisé en ce que** l'étape de calcul du couple à la roue ($C_{roue}$) comporte les étapes consistant à:

- calculer le couple à la roue ($C_{roue}$) en multipliant le rapport de démultiplication (rap(N)) de la transmission du véhicule sur le rapport N, par le couple moteur ($C_{mot}$);
- filtrer le couple à la roue ($C_{roue}$) à l'aide de filtres passe-bas de manière à obtenir une information de couple à la roue ($C_{roue.fil}$) en phase avec l'information d'accélération filtrée ($\gamma_{fil}$) du véhicule.

8. Procédé selon la revendication 4, **caractérisé en ce que** la série de p variations ($\Delta C, \Delta \gamma$) de l'accélération et du couple est calculée entre deux instants ($t_1, t_2$) espacés de l'ordre de 0,5 seconde à 2,5 secondes.

9. Procédé selon la revendication 4, **caractérisé en ce que** les moindres carrés récursifs des variations ($\Delta C, \Delta \gamma$) de l'accélération et du couple sont calculés pour des variations ($\Delta Ci, \Delta \gamma i$) (i étant compris entre 0 et p) de l'accélération et du couple obtenues lorsque les freins du véhicule ne sont pas activés, lorsque la variation de l'angle d'ouverture des papillons de gaz entre les instants ($t_1, t_2$) donnés est inférieure à un seuil ($S_{d\alpha}$) donné, et lorsque les produits ($\Delta Ci.\Delta \gamma i$) des variations du couple par les variations de l'accélération sont supérieurs à un seuil ($S_{C\gamma}$) positif prédéterminé.

10. Véhicule automobile, **caractérisé en ce qu'**il met en oeuvre le procédé de suppression du phénomène de pompage selon l'une quelconque des revendications précédentes.

**Claims**

1. A method of inhibiting the phenomenon of hunting of a motor vehicle with an automatic gearbox resulting from the instability of the latter, by processing a signal inhibiting transition to the higher ratio, adapted to be applied to a gearbox control device, **characterised in that**:

- the vehicle mass (M) is determined, using the measured speed ($V_{mes}$) of the vehicle, the current ratio (N) of the gear box, the engine speed ($N_{mot}$), the angle of opening ($\alpha_{pap}$) of the gas regulators of the engine, and taking account of the state of the brakes,
- the acceleration ($\gamma(N+1)$) that the vehicle would have at the higher ratio (N+1) is determined from the vehicle mass (M),
- the sum of the tractive resistance ($F_{resistance}$) applied to the vehicle is determined,
- the possibility of the occurrence of a hunting phenomenon at the higher ratio (N+1), called "risk of hunting", is determined from the acceleration ($\gamma(N+1)$) and $F_{resistance}$ data, and
- the inhibition signal is processed from the "risk of hunting" datum.

2. A method as claimed in claim 1, **characterised in that** in order to determine the probability of occurrence of a phenomenon of hunting at the higher ratio (N+1), a fuzzy logic technique is used, comprising the stages of:

- determining the degree of belonging ($\mu_\gamma$) of the potential acceleration at the higher ratio ($\gamma(N+1)$) to a negative fuzzy sub-set defined by a given acceleration threshold ($S_\gamma$);
- determining the degree of belonging ($\mu_{Fr}$) of the tractive resistance to a positive fuzzy sub-set defined by a lower threshold ($S_{r1}$) of tractive resistance and an upper threshold ($S_{r2}$) of tractive resistance;
- from the degrees of belonging ($\mu_\gamma, \mu_{Fr}$) to the fuzzy sub-sets, determining the risk of hunting at the higher ratio (N+1) as being the minimum value Min($\mu_\gamma, \mu_{Fr}$) of the pair of degrees of belonging.

3. A method as claimed in claim 2, **characterised in that** the lower threshold ($S_{r1}$) and the upper threshold ($S_{r2}$) of

tractive resistance, and/or the acceleration threshold ($S_\gamma$) at the higher ratio are determined by development, and depend on the current ratio engaged.

4. A method as claimed in any one of the preceding claims, **characterised in that** the determination of the mass of the vehicle comprises the stages of:

   - calculating the acceleration ($\gamma_{mes}$) of the vehicle from the measured speed ($V_{mes}$) of the vehicle;
   - calculating the wheel torque from the angle of opening ($\alpha_{pap}$) of the gas regulators, the engine speed and the demultiplication ratio (rap(N)) of the gearbox at the current ratio (N);
   - determining a series of p variations ($\Delta C$, $\Delta \gamma$) of the acceleration and torque between two given instants ($t_1$, $t_2$);
   - calculating the mass (M) of the vehicle by a recursive least squares identification method of the variations ($\Delta C$, $\Delta \gamma$) of the acceleration and the torque.

5. A method as claimed in claim 4, **characterised in that** the stage of calculation of the mass (M) of the vehicle comprises a stage of calculation of a gross mass ($M_{gross}$) calculated for each variation ($\Delta C$, $\Delta \gamma$) of the acceleration and the torque, followed by a stage of calculation of the mass (M) by calculation of a recursive mean from successive gross mass data.

6. A method as claimed in one of claims 4 or 5, **characterised in that** the stage of calculation of the acceleration ($\gamma_{mes}$) of the vehicle from the measured speed ($V_{mes}$) of the vehicle comprises the stages of:

   - filtering of the measured speed datum ($V_{mes}$) by means of a digital low-pass filter of the first order, in order to obtain a filtered speed datum ($V_{fil}$);
   - calculating the digital derivation of the filtered speed datum ($V_{fil}$) in order to obtain a vehicle acceleration datum ($\gamma_{mes}$);
   - filtering the vehicle acceleration datum ($\gamma_{mes}$) by means of a digital low-pass filter in order to obtain a filtered vehicle acceleration datum ($\gamma_{fil}$).

7. A method as claimed in one of claims 4 or 5, **characterised in that** the stage of calculation of the wheel torque ($C_{wheel}$) comprises the stages of:

   - calculating the wheel torque ($C_{wheel}$) by multiplying the demultiplication ratio (rap(N)) of the vehicle transmission at the ratio N by the engine torque ($C_{mot}$);
   - filtering the wheel torque by means of low-pass filters in order to obtain a wheel torque datum ($C_{wheel.fil}$) in phase with the filtered vehicle acceleration datum ($\gamma_{fil}$).

8. A method as claimed in claim 4, **characterised in that** the series of p variations ($\Delta C$, $\Delta \gamma$) of the acceleration and the torque is calculated between two instants ($t_1$, $t_2$) spaced by the order of 0.5 to 2.5 seconds.

9. A method as claimed in claim 4, **characterised in that** the recursive least squares of the variations ($\Delta C$, $\Delta \gamma$) of the acceleration and the torque are calculated for variations ($\Delta Ci$, $\Delta \gamma i$) (i being comprised between 0 and p) of the acceleration and the torque obtained when the vehicle brakes are not actuated, when the variation of the angle of opening of the gas regulators between the given instants ($t_1$, $t_2$) is lower than a given threshold ($S_{d\alpha}$) and when the products ($\Delta Ci$, $\Delta \gamma i$) of the variations of the torque by the variations of the acceleration are greater than a positive predetermined threshold ($S_{c\gamma}$).

10. A motor vehicle, **characterised in that** it implements the method of inhibiting the phenomenon of hunting as claimed in any one of the preceding claims.

**Patentansprüche**

1. Verfahren zur Unterdrückung des durch die Instabilität des Getriebes entstehenden Pendeleffekts in einem Kraftfahrzeug mit Automatikgetriebe durch die Ausgabe eines Signals zum Verbot des Übergangs zum höheren Gang, das dazu bestimmt ist, in einer Getriebesteuerungsvorrichtung angewendet zu werden, **dadurch gekennzeichnet, dass**:

   - man die Masse (M) des Fahrzeugs bestimmt, wobei man die gemessene Geschwindigkeit ($V_{mes}$) des Fahr-

zeugs, den gerade eingelegten Gang (N) des Getriebes, die Motordrehzahl ($N_{mot}$) und den Öffnungwinkel ($\alpha_{dro}$) der Drosselklappen des Motors verwendet und wobei man den Zustand der Bremsen berücksichtigt,

- man ausgehend von der Masse (M) des Fahrzeugs die Beschleunigung ($\gamma(N+1)$) bestimmt, die das Fahrzeug im höheren Gang (N+1) erfahren würde,

- die Summe der auf das Fahrzeug einwirkenden Widerstandskräfte ($F_{Widerstand}$) bestimmt,

- man ausgehend von den Informationen Beschleunigung ($\gamma(N+1)$) und Widerstandskräfte ($F_{Widerstand}$) die Möglichkeit des Auftretens eines Pendeleffekts im höheren Gang (N+1), genannt "Pendelrisiko", bestimmt, und

- man ausgehend von der Information "Pendelrisiko" ein Verbotssignal ausgibt.

2. Verfahren nach Anspruch 1, **dadurch gekennzeichnet, dass** man zur Bestimmung der Wahrscheinlichkeit des Auftretens eines Pendeleffekts im höheren Gang (N+1) eine Technik der unscharfen Logik verwendet, die folgende Schritte umfasst:

- Bestimmung des Zugehörigkeitsgrades ($\mu_\gamma$) der potentiellen Beschleunigung im höheren Gang ($\gamma(N+1)$) zu einer negativen unscharfen Teileinheit, die durch eine gegebene Beschleunigungsschwelle ($S_\gamma$) definiert wird;

- Bestimmung des Zugehörigkeitsgrades ($\mu_{Fr}$) der Widerstandskräfte zu einer positiven unscharfen Teileinheit, die durch eine untere Widerstandskraftschwelle ($S_{r1}$) und eine obere Widerstandskraftschwelle ($S_{r2}$) definiert wird;

- ausgehend von den Zugehörigkeitsgraden zu den unscharfen Teileinheiten ($\mu_\gamma$, $\mu_{Fr}$) Bestimmung des Pendelrisikos im höheren Gang (N+1) als Mindestwert Min ($\mu_\gamma$, $\mu_{Fr}$) des Paars der Zugehörigkeitsgrade.

3. Verfahren gemäß Anspruch 2, **dadurch gekennzeichnet, dass** die untere Schwelle ($S_{r1}$) und die obere Schwelle ($S_{r2}$) der Widerstandskräfte und/oder die Beschleunigungsschwelle ($S_\gamma$) im höheren Gang durch eine Einstellung bestimmt werden und vom gerade eingelegten Gang abhängen.

4. Verfahren nach einem der vorhergehenden Ansprüche, **dadurch gekennzeichnet, dass** die Bestimmung der Masse des Fahrzeugs die folgenden Schritte umfasst:

- Berechnung der Beschleunigung ($\gamma_{mes}$) des Fahrzeugs ausgehend von der gemessenen Geschwindigkeit ($V_{mes}$) des Fahrzeugs;

- Berechnung des Raddrehmoments ($C_{Rad}$) ausgehend vom Öffnungswinkel der Drosselklappen ($\alpha_{dro}$), von der Motordrehzahl und vom Untersetzungsverhältnis (rap(N)) des Getriebes im gerade eingelegten Gang (N);

- Bestimmung einer Serie von p Veränderungen ($\Delta C$, $\Delta\gamma$ der Beschleunigung und des Moments zwischen zwei gegebenen Zeitpunkten ($t_1$, $t_2$);

- Berechnung der Masse (M) des Fahrzeugs durch eine Technik der Identifizierung der kleinsten rekursiven Quadrate der Veränderungen ($\Delta C$, $\Delta\gamma$) der Beschleunigung und des Moments.

5. Verfahren nach Anspruch 4, **dadurch gekennzeichnet, dass** der Schritt der Berechnung der Masse (M) des Fahrzeugs einen Schritt zur Berechnung einer Bruttomasse ($M_{brutto}$), die für jede Veränderung ($\Delta C$, $\Delta\gamma$) der Beschleunigung und des Moments gemessen wird, gefolgt von einem Schritt zur Berechnung der Masse (M) durch Berechnung eines rekursiven Mittelwerts ausgehend von den aufeinanderfolgenden Informationen über die Bruttomasse, umfasst.

6. Verfahren nach einem der Ansprüche 4 oder 5, **dadurch gekennzeichnet, dass** der Schritt der Berechnung der Beschleunigung ($\gamma_{mes}$) des Fahrzeugs ausgehend von der gemessenen Geschwindigkeit ($V_{mes}$) des Fahrzeugs die folgenden Schritte umfasst:

- Filterung der Information gemessene Geschwindigkeit ($V_{mes}$) mit Hilfe eines numerischen Tiefpassfilters erster Ordnung, um eine Information gefilterte Geschwindigkeit ($V_{fil}$) zu erhalten;

- Berechnung der numerischen Ableitung der Information gefilterte Geschwindigkeit ($V_{fil}$), um eine Information Beschleunigung ($\gamma_{mes}$) des Fahrzeugs zu erhalten;

- Filterung der Information Beschleunigung ($\gamma_{mes}$) des Fahrzeugs mit Hilfe eines numerischen Tiefpassfilters, um eine Information gefilterte Beschleunigung ($\gamma_{fil}$) des Fahrzeugs zu erhalten.

7. Verfahren nach einem der Ansprüche 4 oder 5, **dadurch gekennzeichnet, dass** der Schritt zur Berechnung des Raddrehmoments ($C_{Rad}$) die folgenden Schritte umfasst:

- Berechnung des Raddrehmoments ($C_{Rad}$), indem man das Untersetzungsverhältnis (rap(N)) des Getriebes des Fahrzeugs mit dem Gang N mit dem Motordrehmoment ($C_{mot}$) multipliziert;

- Filterung des Raddrehmoments ($C_{Rad}$) mit Hilfe von Tiefpassfiltern, um eine Information Raddrehmoment ($C_{Rad.fil}$) zu erhalten, die phasengleich mit der Information gefilterte Beschleunigung ($\gamma_{fil}$) des Fahrzeugs ist.

8. Verfahren nach Anspruch 4, **dadurch gekennzeichnet, dass** die Serie von p Veränderungen ($\Delta C$, $\Delta \gamma$) der Beschleunigung und des Moments zwischen zwei Zeitpunkten ($t_1$, $t_2$) gemessen wird, die etwa 0,5 Sekunden bis 2,5 Sekunden auseinander liegen.

9. Verfahren nach Anspruch 4, **dadurch gekennzeichnet, dass** die kleinsten rekursiven Quadrate der Veränderungen ($\Delta C$, $\Delta \gamma$) der Beschleunigung und des Moments für Veränderungen ($\Delta Ci$, $\Delta \gamma i$) (wobei i zwischen 0 und p beträgt) der Beschleunigung und des Moments berechnet werden, die man erhält, wenn die Bremsen des Fahrzeugs nicht betätigt werden, wenn die Veränderung des Öffnungswinkels der Drosselklappen zwischen den gegebenen Zeitpunkten ($t_1$, $t_2$) unter einer gegebenen Schwelle ($S_{d\alpha}$) liegt, und wenn die Produkte ($\Delta Ci.\Delta \gamma i$) der Veränderungen des Moments mit den Veränderungen der Beschleunigung über einer vorbestimmten positiven Schwelle ($S_{C\gamma}$) liegen.

10. Kraftfahrzeug, **dadurch gekennzeichnet, dass** darin das Verfahren zur Unterdrückung des Pendeleffekts gemäß einem der vorhergehenden Ansprüche eingesetzt wird.

α pap ⎯ ⎯ ⎯ ⎯ ⎯ ⎯ ⎯ ⎯ ⎯ ⎯ ⎯ ⎯ ⎯ ⎯ ⎯

D × ⎯ ⎯ × A

1

2

3

C × ⎯ ← × B

Vitesse

## FIG.1

Vmes          N          α pap

| Détermination de la masse du véhicule | 11 |

Vmes          N     M     α pap     Nmot

| Détermination de l'accélération sur N+1 et de l'effort résistant | 12 |

$\gamma$(N+1)                    Frésistant

| Détermination du risque de pompage si on passait le rapport supérieur | 13 |

risque de pompage

| Détermination de l'interdiction de passage | 14 |

interdiction de passage

## FIG.3

Vmes

7

α pap

8

Nmot

9

N

frein

10

```
Dispositif de commande
de l'interdiction de
passage
```

4

interdiction

de passage

5

TCU

6

N

## FIG.2

Négative

−6        −Sγ        0        γ(N+1)

## FIG.4

Positif

0    Sr₁    Sr₂        6    Frésistant

## FIG.5

20a → | Filtre P.Bas |

Vmes

α pap | Calcul du couple roue | ← 22     Nmot

Vfil

21

| Dérivation |

Cmot          N

| Calcul du couple roue | ← 23

23

$\gamma$ mes

Croue

20b → | Filtre P.Bas |

| Filtre P.B | → 20c

$\gamma$ fil

Croue1

| Filtre P.B | → 20d

frein

Croue fil

| Calcul des variations d'accélération et de couple | → 24

$\Delta\gamma$          $\Delta C$

| Calcul de la masse par une méthode des moindres carrés récursifs | → 25

Mbrute

| Moyennage | → 26

**FIG.6**

M